Europäisches Patentamt

European Patent Office

Office européen des brevets

(11) Veröffentlichungsnummer: **0 292 867 B1**

## (12) EUROPÄISCHE PATENTSCHRIFT

(45) Veröffentlichungstag der Patentschrift: **15.04.92**

(21) Anmeldenummer: **88108013.9**

(22) Anmeldetag: **19.05.88**

(51) Int. Cl.5: **F16C 3/02**

(54) Zweiseitig gelagerte Welle.

(30) Priorität: **23.05.87 DE 3717492**
**16.12.87 DE 3742571**

(43) Veröffentlichungstag der Anmeldung:
**30.11.88 Patentblatt 88/48**

(45) Bekanntmachung des Hinweises auf die
Patenterteilung:
**15.04.92 Patentblatt 92/16**

(84) Benannte Vertragsstaaten:
**CH DE ES FR GB IT LI**

(56) Entgegenhaltungen:
**DE-A- 1 525 040       DE-A- 2 951 146**
**DE-A- 3 340 864       DE-B- 1 221 854**
**DE-C- 198 088         FR-A- 1 467 755**
**GB-A- 1 462 170**

(73) Patentinhaber: **BARMAG AG**
**Leverkuser Strasse 65 Postfach 11 02 40**
**W-5630 Remscheid- 11 Lennep(DE)**

(72) Erfinder: **Lenk, Erich, Dr.**
**Semmelweisstrasse 4**
**W-5630 Remscheid 11(DE)**
Erfinder: **Fenger, Eberhard**
**Paul-Windgassen-Strasse 91**
**W-5630 Remscheid 11(DE)**

(74) Vertreter: **Pfingsten, Dieter, Dipl.-Ing.**
**Barmag AG Leverkuser Strasse 65 Postfach**
**110240**
**W-5630 Remscheid 11(DE)**

EP 0 292 867 B1

## Beschreibung

Die Erfindung betrifft eine Welle nach dem Oberbegriff des Anspruchs 1.

Es ist bekannt, daß rotierende Wellen biegekritische Drehzahlen besitzen (z.B. DUBBEL, 14. Auflage 1981, S. 153). Diese Tatsache ist insbesondere dann von Nachteil, wenn diese Wellen nicht mit einer einzigen Drehzahl betrieben werden, sondern innerhalb bestimmter Drehzahlbereiche. Dies wird im folgenden am Beispiel einer Treibwalze in Aufspulmaschinen zum Aufwickeln von Chemiefasern, vgl. z.B. DE-PS 22 61 709 = US-PS 3,917,182, gezeigt, bei der unterschiedliche Drehzahlen der Treibwalze realisiert werden müssen, um unterschiedliche Spuldrehzahlen zu erhalten. Dabei wird die zweiseitig gelagerte Treibwalze mit einer bestimmten Anpreßkraft auf die drehbar gelagerte Garnspule gedrückt. Durch Reibschluß zwischen Treibwalze und Garnspule wird die Garnspule angetrieben, sobald die Treibwalze sich dreht. Die reibschlüssige Verbindung zwischen Treibwalze und Garnspule ist nur dann möglich, wenn ständiger Kontakt zwischen Treibwalze und Garnspule durch Anpressen gesichert ist. Deshalb werden solche Walzen auch als Kontaktwalzen bezeichnet. Auf die oben genannten Patentschriften wird für alle Treibwalzen für derartige Spulmaschinen Bezug genommen. Hierbei hat die Treibwalze die Funktion, die Garnspule mit einer konstanten Geschwindigkeit an ihrem Umfang anzutreiben. Es kann jedoch erforderlich sein, daß unterschiedliche Spulgeschwindigkeiten und damit unterschiedliche Treibwalzendrehzahlen im praktischen Betrieb realisiert werden müssen. Die heute realisierten Fadengeschwindigkeiten sind jedoch so hoch, daß die Welle und die Lagerung nicht so steif ausgeführt werden können, daß die erste kritische Drehzahl oberhalb des Betriebsbereiches liegt. Deshalb führt man Welle und Lagerung so aus, daß die erste kritische Drehzahl vor Erreichen der Betriebsdrehzahl schnell durchfahren wird. Dann wird aber der Bereich der möglichen Betriebsdrehzahlen nach unten durch die erste kritische Drehzahl und nach oben durch die zweite kritische Drehzahl eingegrenzt. Es ist dem Fachmann bekannt, daß der Abstand zwischen der ersten und der zweiten kritischen Drehzahl durch die Änderung der Wellensteifigkeit bzw. der Lagerung nicht verändert werden kann, weil mit Verändern der Steifigkeit von Welle und Lager die erste und die zweite kritische Drehzahl gleichsinnig verändert werden. Es sind keine Maßnahmen bekannt, um den Abstand zwischen der ersten und der zweiten kritischen Drehzahl zu vergrößern.

Durch die DE-A-33 20 655 ist es bekannt, die Bereiche rotierender Körper, in denen Schwingungsknoten auftreten, aus Verformungselementen zu bilden, die in Faserverbundbauweise hergestellt sind und bei denen die sie aufbauenden Fasern innerhalb von Wandstegen verlaufen und sich in den Verbindungsbereichen zwischen den die Wandstege voneinander trennenden Durchbrechungen kreuzen.

Aufgabe der Erfindung ist, die Welle so zu schaffen, daß der Abstand zwischen der ersten und der zweiten kritischen Drehzahl vergrößert wird.

Diese Aufgabe wird durch das Kennzeichen des Anspruchs 1 gelöst. Die Lösung besteht darin, daß die zweiseitig gelagerte Welle in ihrem Längsbereich nur dort geschwächt ist, wo der Wendepunkt ihrer zweiten kritischen Biegeschwingung liegt. Bei einer zur zweiseitigen Lagerung symmetrischen Welle ist dies der Mittelbereich der Welle zwischen den Lagern. Durch diese Maßnahme wird erreicht, daß die Höhe der zweiten kritischen Drehzahl unverändert bleibt, die erste kritische Drehzahl jedoch abgesenkt wird. Bei einem einseitigen Welenantrieb, wie er z. B. bei einer Treibwalze vorgesehen ist, muß die Verbindung der lagerseitigen Wellenenden auch drehfest sein.

Es wurde herausgefunden, daß eine Schwächung der Welle, die in demjenigen Längsbereich erfolgt, in welchem auch der Schwingungsknoten der zweiten kritischen Drehzahl liegt, bewirkt, daß die erste kritische Drehzahl abgesenkt und die zweite kritische Drehzahl beibehalten wird.

Aus den Kennzeichen des Anspruchs 2 ergibt sich eine Ausführung, die sehr preiswert gefertigt werden kann. Hierzu wird die Welle in dem Längsbereich des Schwingungsknotens/ Wendepunkts durch eine Verminderung der tragenden Querschnittsfläche geschwächt.

Um Unwuchten zu vermeiden, wird vorgeschlagen, daß die Verminderung rotationssymmetrisch angebracht wird. Der Einsatz der Welle als Treibwalze bzw. Kontaktwalze für eine Spulmaschine zum Aufwickeln von Chemiefasern verlangt jedoch, daß die durchgehende Auflagelänge der Welle nicht bzw. nur unwesentlich beeinträchtigt wird. Bei Kontaktwalzen ist die Auflagelänge diejenige Axiallänge der Walze, auf der Kontaktwalze und Garnspule in Berührung sind.

Hierzu wird in der Ausführung nach Anspruch 3 die Welle in dem zu schwächenden Bereich außen mit einer Ringnut versehen und die ursprünglich durchgehende Auflagelänge dadurch wiederhergestellt, daß die Ringnut bis auf den ursprünglichen Wellendurchmesser mit einem geeigneten Material aufgefüllt wird. Dieses Material muß so beschaffen sein, daß die Biegesteifigkeit der genuteten Welle trotz Auffüllung kleiner ist als die Biegesteifigkeit der ursprünglich vorhandenen Welle. Ein geeignetes Material ist z.B. Silicon. Beim Einsatz der Welle als Treibwalze mit ständigem Kontakt zur Spule wird vorteilhaft ein abriebfestes Füllmaterial verwendet. Es eignet sich beispielsweise ein gut vergieß bares Metall, wie z.B. Lagermetall. Um die Betriebssicherheit der so geschwächten Welle auch bei hohen Drehzahlen sicherzustellen, muß man die Wirkung der Fliehkräfte auf die Füllung berücksichtigen.

In der Ausführung nach Anspruch 4 erfolgt die Kompensation der auftretenden Fliehkräfte, indem eine in radialer Richtung konvergente Vertiefung, wie z.B. eine schwalbenschwanzförmige Ringnut, an der Welle angebracht wird. Bei dem Einsatz der Welle als Treibwalze im Dauerbetrieb besteht bei diesem Ausführungsbeispiel jedoch die Gefahr, daß die Füllung einem anderen Verschleiß unterliegt, als die restliche Wellenoberfläche.

Dies wird in der Ausführung nach Anspruch 5 gänzlich vermieden, die einfach herstellbar ist, sich insbesondere als Treibwalze eignet und dabei jedes Hindernis für den Faden, aber auch jede Schädigung der Spule und des Fadens meidet. Hierbei weist die Welle in dem Bereich, der geschwächt werden soll, mindestens ein biegeweiches Wellenstück auf, welches die lagerseitigen Wellenstücke zusammenhängend und durchgehend miteinander verbindet.

Hierbei ist die Welle im Bereich des Schwingungsknotens/Wendepunkts der Biegeschwingung 2. Ordnung, im allgemeinen also etwa mittig zwischen den Lagern, geteilt, und die beiden Teile sind durch ein biegeweiches Wellenstück biegefest miteinander verbunden. Das biegeweiche Wellenstück ist rotationssymmetrisch ausgebildet und angeordnet. Seine Biegesteifigkeit ist geringer als die Biegesteifigkeit der Welle. Es ist jedoch mit den beiden Teilen der Welle so verbunden, daß es die Biegemomente der Welle spielfrei überträgt. Sofern zwischen den Teilen der Welle auch ein Drehmoment übertragen werden soll, ist das biegeweiche Wellenstück auch drehfest mit den Teilen der Welle verbunden.

In einer Ausführung liegen die angrenzenden Stirnflächen der beiden Wellenteile jeweils in einer Normalebene und bilden miteinander einen Ringspalt. Dieser Ringspalt kann mit einem elastischen Material ausgefüllt werden. Der Spalt kann auch dadurch zumindest annähernd so ausgeführt werden, daß das biegeweiche Wellenstück mit Ausnahme seiner Enden denselben Durchmesser wie die Welle besitzt. Vorzugsweise ist der Spalt jedoch sehr eng und gerade weit genug, daß die Stirnflächen sich bei der im Betrieb vorkommenden Ausbiegung der Welle nicht berühren. Für eine Kontaktwalze ist eine solche Ausbildung sehr günstig, da der enge Spalt von dem Faden überlaufen werden kann.

Für die vorliegende Anmeldung sind mit lagerseitigen Wellenenden bzw. lagerseitigen Wellenstü ken diejenigen Bereiche der Welle gemeint, an denen die Lager angebracht sind, soweit die lagerseitigen Wellenenden bzw. Wellenstücke für sich als durchgehend und zusammenhängend bezeichnet werden können. Biegeweich sind diejenigen Wellenstücke, deren Biegesteifigkeit bezüglich Biegung um ihre geometrische Längsachse der Drehbewegung gezielt vermindert ist. Unter Verbindungen sind alle Vorrichtungen zu verstehen, die die schlüssige Berührung beteiligter Vorrichtungen unter normalen, im Betrieb auftretenden Belastungen sicherstellen.

Soweit nichts anderes gesagt ist, sind unter Wellenstücken Bestandteile der Welle zu verstehen. Wellenteile sind voneinander getrennte Abschnitte der Welle.

Das biegeweiche Wellenstück kann deshalb sowohl aus einem Stück mit der Welle bestehen (z.B. Fig. 1) und/oder Bestandteil eines Wellenteils sein (z.B. Fig. 2, 2a, 3, 3a, 5, 6, 6a) als auch als separates Bauteil mit den lagerseitigen Wellenenden spielfrei biegefest, evtl. auch drehfest verbunden sein (z.B. Fig. 4). Spulgeschwindigkeiten von etwa 5000 m/min erfordern aufgrund der hohen Treibwalzendrehzahlen, daß auch die drehfesten Verbindungen spielfrei ausgeführt werden müssen. Als spielfrei biegefeste und drehfeste Verbindung kann vorteilhaft eine Schrumpfpassung nach Anspruch 9 verwendet werden. Weitere geeignete Verbindungen enthalten die Ansprüche 10, 11. So kann beispielsweise das biegeweichere Wellenstück mit den angrenzenden Wellenstücken durch eine umlaufende Schweißnaht verbunden sein.

Als Klemmverbindungen kommen auch kegelförmige Reibschlußverbindungen in Betracht, die durch eine axial aufgebrachte Kraft, z.B. durch Federspannung, die Drehbewegung auf die angrenzenden Wellenstücke spielfrei übertragen können. Erfindungsgemäß kann das biegeweichere Wellenstück als Zapfen in entsprechende Bohrungen der angrenzenden Wellenstücke eingreifen oder stirnseitig konzentrische Bohrungen aufweisen, in die die angrenzenden Wellenstücke eingepaßt sind. Dies gilt auch, wenn es ein separates Bauteil ist. In einer Ausführung ist die Welle quer zur Drehachse geteilt und die Wellenteile sind spielfrei miteinander verbunden. Eine spielfreie und auch drehfeste Verbindung ist dadurch herstellbar, daß die jeweils benachbarten Wellenstücke zueinander eng sitzend angepaßt sind. Die durchgehende Verbindung der jeweils benachbarten Wellenstücke kann z.B. durch einen biegeweichen Zapfen erfolgen.

Zweckmäßigerweise besitzen die Ausführungen nach Anspruch 6 bzw. 7 einen rotationssymmetrischen Verbindungszapfen wie z.B. einen zylindrischen Zapfen, der mit jedem freien Ende in einer zentrischen Bohrung in dem angrenzenden Wellenstück sitzt. Das bedeutet, daß der Zapfen einen rotationssymmetrischen Querschnitt besitzt und daß er rotationssymmetrisch zur Wellenachse, also zentrisch, angeordnet ist. Die notwendige spielfrei biegefeste und drehfeste Verbindung wird z.B. besonders einfach und trotzdem dauerhaft durch eine Preßpassung zwischen dem zylindrischen Zapfen und der zylindrischen Bohrung hergestellt.

Vorteilhaft kann auch ein biegeweiches Wellenstück mit zylindermantelförmigen Ausnehmungen in das jeweils angrenzende Wellenstück eingepaßt sein. Durch diese Ausbildungsform werden die verbindenden, ringförmigen Flächen, die das Drehmoment von einem Wellenstück auf das nächste übertragen, vergrößert, so daß durch diese Verbindung sehr hohe Drehmomente übertragen werden können.

Ein Zylindermantel im Sinne dieser Anmeldung besteht aus zwei Bereichen, einem äußeren und einem inneren, die durch mindestens zwei unterschiedliche radiale Abmessungen und mindestens eine axiale Länge eindeutig bestimmbar sind.

Um die Teile der Welle mit einem gemeinsamen Zapfen zu verbinden, besteht die Möglichkeit, den Zapfen sowohl als selbständigen Körper auszuführen als auch ein Wellenteil auf einen kleineren Durchmesser abzudrehen, so daß ein Zapfen entsteht; die sich gegenüberliegenden Kreisflächen der Wellenteile sind dann entweder mit zwei oder mit einer axialen zentrischen Bohrung in den Kreismittelpunkten zu versehen. Einen dauerhaft biegeweichen Zapfen erhält man nach Anspruch 8 insbesondere dann, wenn der Zapfen an jedem freien Ende zylindrisch ist und eine sanft verlaufende Querschnittsabnahme zu seiner Mitte hin erhält, bzw. wenn man sprunghafte Durchmesserübergänge vermeidet. Hierzu sind Ausführungsbeispiele angegeben. Der Zapfen sitzt mit jedem freien Ende in einer zentrisch angebrachten Bohrung.

In der vorteilhaften Ausführung nach Anspruch 12, die sich besonders auch für den Einsatz als Treibwalze eignet, bilden die beiden lagerseitigen Wellenstücke auf der Wellenoberfläche einen so geringen axialen Spalt, daß der Spalt von dem unter einem Winkel laufenden bzw. auf der Spule abgelegten Faden übersprungen wird. Durch den Spalt wird die erste kritische Drehzahl noch weiter abgesenkt, da die Wirkung der biegeweichen Verbindung, die beispielsweise aus einem biegeweichen Zapfen bestehen kann, durch den Spalt begünstigt wird.

Da dieser Spalt weniger als 1 mm in seinen Abmessungen betragen kann, wird hierdurch die Auflagelänge der Welle nur unwesentlich beeinträchtigt.

Im folgenden werden Ausführungsbeispiele der Erfindung anhand der Zeichnungen beschrieben. Da die Erfindung sich allgemein auf Wellen bezieht, werden im folgenden Beispiele gezeigt, die allgemeine, zweifach gelagerte Wellen darstellen.

Es soll jedoch klargestellt sein, daß die dargestellten Beispiele ohne weiteres auch auf Treibwalzen übertragen werden können.

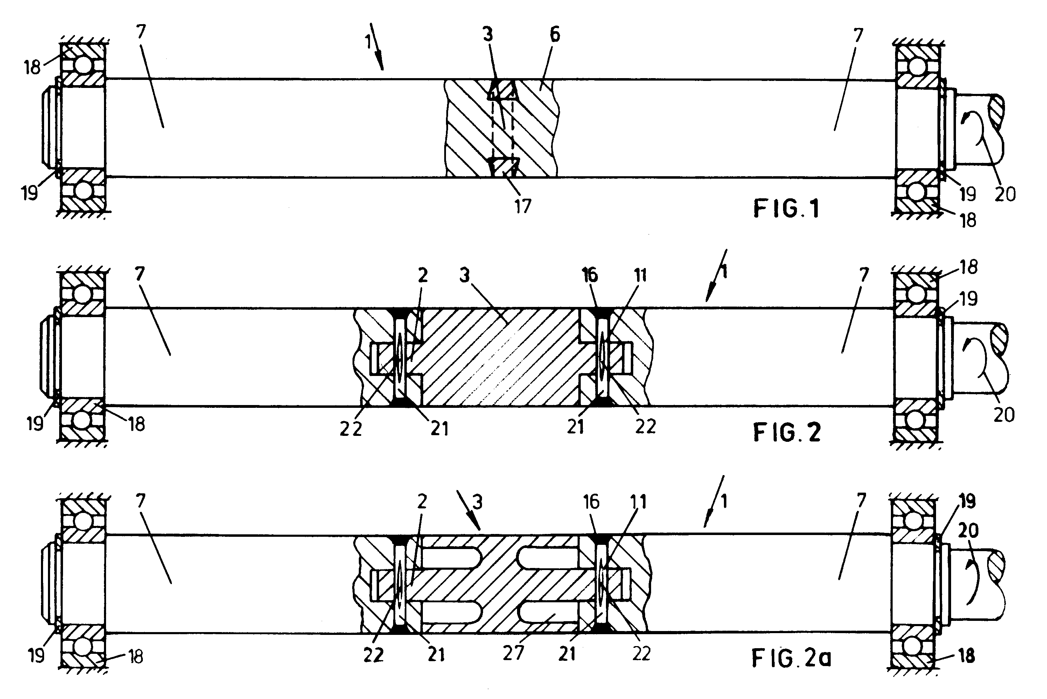

In Fig. 1 wird eine einfache Ausführungsform der Erfindung gezeigt. Fig. 1 zeigt: eine zweiseitig kugelgelagerte (18) Welle 1 mit symmetrischer Ausbildung, bei der im mittleren Bereich zur Schwächung eine Ringnut 17 angebracht ist. Die lagerseitigen Wellenstücke 7 sind symmetrisch zu dem biegeweicheren Wellenstück 3 angeordnet. Der biegeweiche Bereich 6 liegt ebenfalls symmetrisch zur Lagerung 18. Um die ursprüngliche, durchgehende Auflagelänge der Welle wiederherzustellen, ist die Ringnut aufgefüllt. Die Ringnut ist schwalbenschwanzförmig ausgebildet, damit das Material, mit dem sie aufgefüllt ist, auch bei hohen Drehzahlen nicht wegfliegen kann. Je ein Lager 18 ist auf dem rechten bzw. linken Wellenende mit je einem Seegerring 19 fest mit der Welle verbunden. Am rechten Wellenende erfolgt der Antrieb 20 der Welle durch ein nicht näher dargestelltes Antriebselement.

Fig. 2 zeigt eine zweiseitig kugelgelagerte Welle 1, bei der zwischen die lagerseitigen Wellenstücke 7 symmetrisch zu den Kugellagern 18 ein biegeweicheres Wellenstück 3 eingepaßt ist. Es ist durch in die lagerseitigen Wellenstücke 7 hineinragende Zapfen 2 rechts und links mit den lagerseitigen Wellenstücken 7 verbunden. Der Antrieb 20 der Welle erfolgt wie in Fig. 1 auf der rechten Seite. Die Zapfen werden in diesem Ausführungsbeispiel durch enggepaßte, quer zur axialen Wellenrichtung verlaufende Stifte 21 spielfrei und drehfest an den lagerseitigen Wellenenden 7 befestigt. Zur Erhöhung der Betriebssicherheit können diese Stifte auch zusätzlich mit den lagerseitigen Wellenenden verschweißt sein (16). Die spielfreie Passung der Stifte 21 erfolgt durch axiale Aufkerbung 22. Hierdurch erhält jeder Stift in dem Klemmbereich einen geringfügig größeren Durchmesser als die entsprechende Bohrung, so daß er dort festgeklemmt wird.

Die Fig. 2a zeigt eine weitere Ausführung der Welle aus Fig. 2. Dort besitzen die Zapfen 2 an ihren Außendurchmessern tief eingedrehte Ringnuten 27, welche die Welle im mittleren Bereich zusätzlich schwächen.

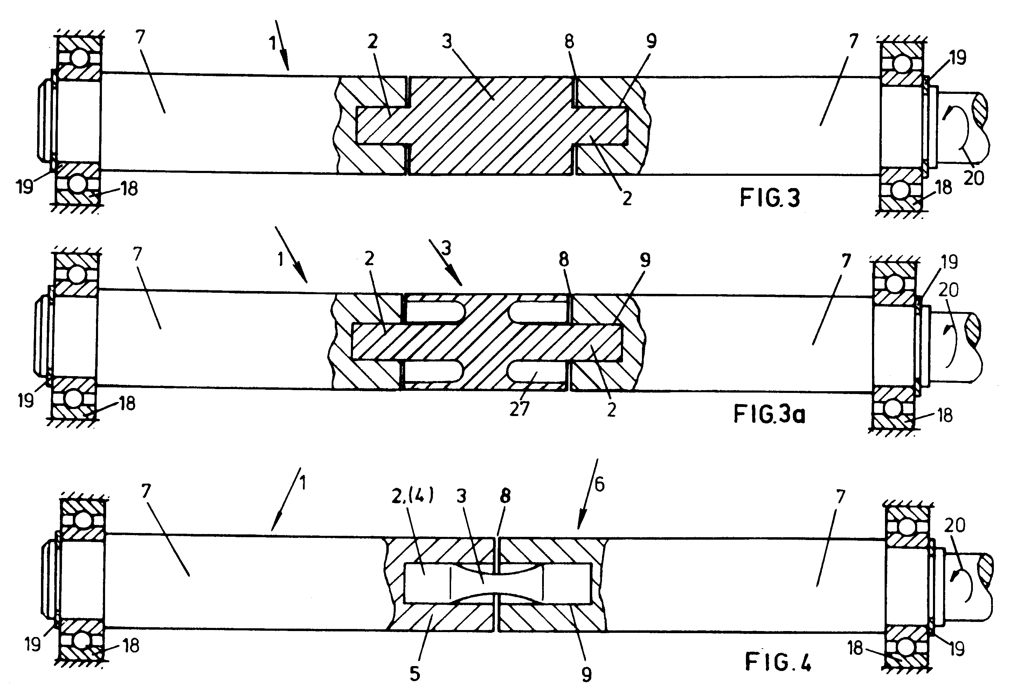

Fig. 3 zeigt eine dreiteilige Welle 1. Die Welle ist zweifach symmetrisch gelagert (18) und mit dem Antrieb 20 auf der rechten Seite versehen. Das mittlere Wellenstück 3 besitzt an jeder Seite einen zentrischen, zylindrischen Zapfen 2, der jeweils in einer zentrischen Bohrung entsprechenden Durchmessers in dem angrenzenden, lagerseitigen Wellenende 7 durch eine Schrumpfverbindung 9 eingepaßt ist. Da die lagerseitigen Wellenenden 7 an ihren Verbindungsstellen zu dem biegeweicheren Wellenstück Bohrungen aufweisen, sind sie dort zylindermantelförmig. Die Stirnflächen der lagerseitigen Wellenenden berühren sich gegenseitig in diesem Ausführungsbeispiel nicht, sondern besitzen einen minimalen Abstand voneinander, wodurch der Spalt 8 entsteht.

Die weitere Ausführung, die Fig. 3a zeigt, unterscheidet sich von Fig. 3 dadurch, daß die Übergänge von den Zapfen 2 zu dem Wellenstück 3 aus tief eingedrehten Ringnuten 24 bestehen, wodurch eine zusätzliche Schwächung erreicht wird.

Die Fig. 4 zeigt die Anordnung einer dreiteiligen Welle 1, die symmetrisch in Kugellagern 18 gelagert ist, mit dem Antrieb 20 wiederum auf der rechten Seite. Der biegeweiche Bereich 6 liegt symmetrisch zwischen den beiden Lagern 18. Die Lager 18 sind mit Seegeringen 19 auf der Welle befestigt. Die Welle besteht im mittleren Bereich aus zylindrischen Mänteln 5, die durch ein biegeweicheres Wellenstück 3 miteinander spielfrei und drehfest verbunden sind. Das biegeweichere Wellenstück ist mittels Schrumpfpassung 9 eingepaßt. Wie man erkennt, bilden die beiden lagerseitigen Wellenenden 7, die im mittleren Bereich zylindermantelförmig ausgebildet sind, radial außerhalb des biegeweicheren Wellenstücks an ihren sich gegenseitig zugewandten Stirnflächen einen so geringen Spalt 8, daß dieser, sofern die Welle als Treibwalze verwendet wird, von dem unter einem Winkel zugeführten Faden bzw. von dem auf der Spule abgelegten Faden übersprungen wird.

Das biegeweichere Wellenstück 3 besitzt überall einen Kreisquerschnitt, ist an den Enden zylindrisch und dort jeweils in die Zylindermäntel 5 eingepaßt. Die Querschnittsfläche des Zapfens wird zwischen den zylindrischen Enden von beiden Seiten zur Zapfenmitte hin verringert und ist dort am kleinsten. Da eine Vielzahl von Ausführungsformen der Erfindung möglich ist, soll in den im folgenden beschriebenen Ausführungsbeispielen die Beschränkung auf die Beschreibung der zu schwächenden Bereiche erfolgen.

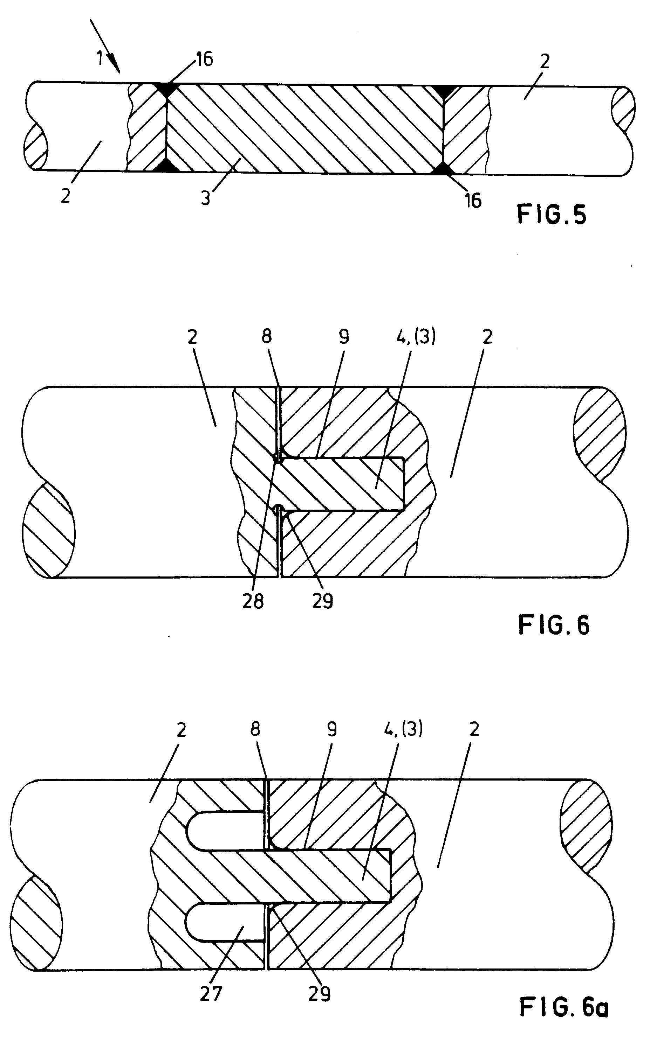

In Fig. 5 wird der geschwächte Bereich als Ausschnitt aus einer langgestreckten Welle 1 gezeigt. Ein biegeweiches Wellenstück 3 ist als separates, zylindrisches Bauteil mit den jeweils angrenzenden Wellenstücken 2 mittels einer rotationssymmetrisch angebrachten Schweißnaht 16 verbunden. Die Biegeweichheit des biegeweicheren Wellenstücks wird dadurch erreicht, daß für das biegweichere Wellenstück ein Material mit geringerem E-Modul als für die angrenzenden Wellenstücke verwendet wird. Die Schweißnähte müssen ausreichend weit von dem zu schwächenden Bereich entfernt sein.

Fig. 6 zeigt den geschwächten Bereich einer Welle, bei der ein zentrischer Zapfen 4 die jeweils angrenzenden Wellenstücke 2 miteinander verbindet. Die aus zwei Teilen bestehende Ausführungsform setzt sich zusammen aus dem linken Wellenstück 2 mit einem abgedrehten Zapfen 4 und dem rechten Wellenstück 2 mit einer zentrischen Ausnehmung für den Zapfen. Der Zapfen 4 ist durch eine Schrumpfverbindung 9 mit dem rechten Wellenstück 2 spielfrei und drehfest verbunden. Um eine lagersymmetrische Biegelinie der geschwächten, symmetrisch gelagerten Welle zu erhalten, muß die Schwächung der Welle symmetrisch zwischen den Lagern erfolgen. Durch den Spalt 8 wird die Welle zusätzlich biegeweich. Ein Freistich 28 am Durchmesserübergang vom Zapfen auf die Welle schwächt den Zapfen weiterhin und macht ihn dauerhaft biegeweich. Die Ausrundung 29 begünstigt die biegeweiche Verbindung zusätzlich.

Die weitere Ausführungsform zeigt Fig. 6a. Die tief eingedrehte Ringnut 27 in dem linken Wellenstück 2 und die Ausrundung 29 am rechten Wellenstück 2 gestatten eine dauerhafte, biegeweiche und trotzdem drehfeste Verbindung und sorgen für eine Schwächung der Welle.

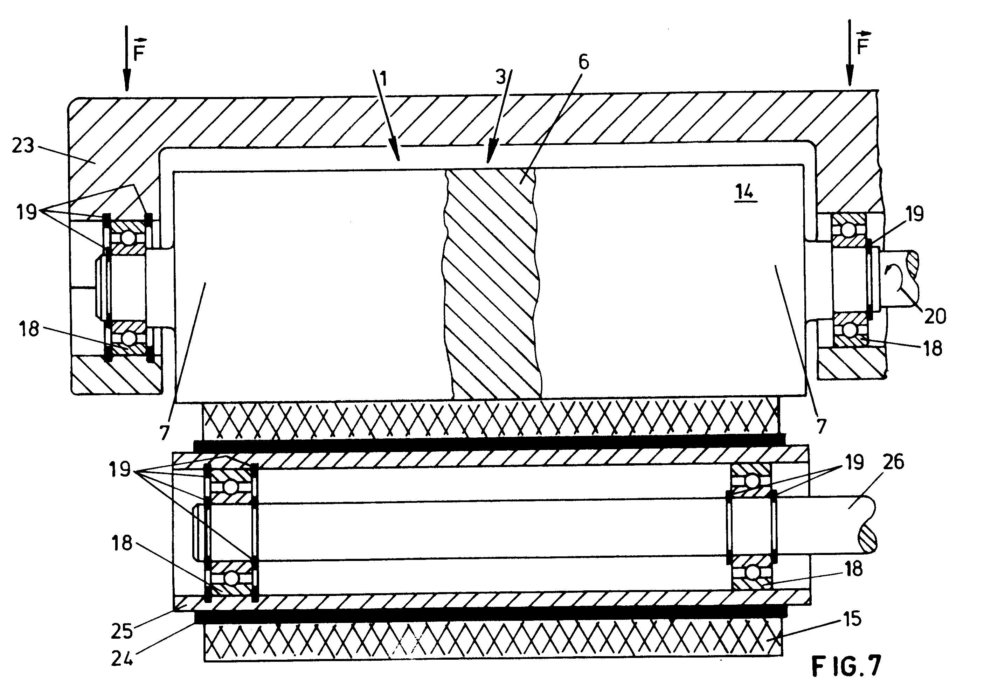

Fig. 7 zeigt eine zweiseitig gelagerte Treibwalze 14. Die Wellenlagerung ist beidseitig der Welle 1 in einem Gehäuse 23 angebracht. Das linke Lager ist dort mit zwei Seegerringen 19 befestigt, das rechte Lager ist ein Loslager. Beide Lager sind mit den Seegerringen 19 an den lagerseitigen Wellenenden 7 befestigt. Das Gehäuse wird von einer äußeren Kraft F zusammen mit der Treibwalze 14 auf die unter ihr dargestellte Garnspule 15 gedrückt. Die Garnspule 15 befindet sich auf einer Papphülse 24, die drehbar gelagert ist. Die drehbare Lagerung besteht aus einem Zylindermantel 25, dessen Außendurchmesser mit dem Innendurchmesser der Papphülse übereinstimmt. Dieser ist auf einem innerhalb angeordneten, auskragenden Halter 26 mittels zweier Kugellager 18 koaxial zur angetriebenen (20) Walze 14 gelagert. Auf dem Halter sind die Lager 18 mit jeweils zwei Seegerringen 19 befestigt. Das linke Lager ist als Festlager mit zwei Seegerringen 19 an dem Zylindermantel 25 befestigt. Das rechte Lager ist ein Loslager. Der Halter 26 befindet sich an einem nicht dargestellten Gehäuse. Weiterhin kann eine Bremse vorgesehen werden, um die rotierende, angetriebene Garnspule 15 im Bedarfsfall schnell abbremsen zu können. Diese Einzelheit ist in der Zeichnung ebenfalls nicht ausgeführt; hierzu wird auf die eingangs genannten Patentschriften verwiesen. Durch die symmetrische Lagerung der Treibwalze 14 wird der zu schwächende Bereich 6 der Treibwalze 14 etwa in der Mitte zwischen ihren beiden rechten und linken Lagern 18 liegen. Die Welle 1 besitzt deshalb dort das biegeweichere Wellenstück 3.

Bezüglich der Ausführung für das biegeweiche Wellenstück 3 wird auf die vorangegangenen Beispiele verwiesen.

**Patentansprüche**

1. Welle (1), die durch einen geschwächten Längsbereich (3) an ihrem Schwingungsknoten mit einer Betriebsdrehzahl über ihrer ersten kritischen Drehzahl betrieben werden kann, wobei der geschwächte Längsbereich (3) mit der übrigen Welle (7, 7) spielfrei verbunden ist, dadurch gekennzeichnet, daß die Welle (1) zweiseitig gelagert ist und nur dort den geschwächten Längsbereich (3) besitzt, wo der Wendepunkt ihrer zweiten kritischen Biegeschwingung liegt.

2. Welle nach Anspruch 1, dadurch gekennzeichnet, daß die Welle (1) in dem Längsbereich (3) durch eine Minderung der tragenden Querschnittsfläche geschwächt ist, die vorzugsweise rotationssymmetrisch angebracht ist und vorzugsweise von einer außen umlaufenden Nut (17) gebildet wird.

3. Welle nach Anspruch 2, dadurch gekennzeichnet, daß die Querschnittsminderung (3) durch eine Füllung auf den Wellendurchmesser gebracht ist.

4. Welle nach Anspruch 3, dadurch gekennzeichnet, daß die Breite der Querschnittsminderung (3) radial nach außen abnimmt.

5. Welle nach Anspruch 1 bis 4, dadurch gekennzeichnet, daß die welle (1) quer zur Drehachse geteilt ist, wobei die Wellenteile (7) durch ein biegeweiches Wellenstück (3) miteinander verbunden sind.

6. Welle nach Anspruch 5, dadurch gekennzeichnet, daß ein Wellenteil (2) einen zentrischen Zapfen (4) besitzt, der einen rotationssymmetrischen, biegeweichen Bereich aufweist und der mit seinem freien Ende (4) in eine zentrische Ausnehmung des benachbarten Wellenteils (2) eingepaßt ist.

7. Welle nach Anspruch 5, dadurch gekennzeichnet, daß das biegeweiche Wellenstück (3) ein selbständiger Zapfen (3) ist, der einen rotationssymmetrischen, biegeweichen Bereich (3) aufweist und der mit seinen Enden (2) in Ausnehmungen der Wellenteile (7) eingepaßt ist, die sich zentrisch gegenüberliegen.

8. Welle nach Anspruch 6 oder 7, dadurch gekennzeichnet, daß der Zapfen (3) an jedem freien Ende einen Zylinderkörper (2) bildet, und daß die Ausnehmung jeweils eine Bohrung ist.

9. Welle nach einem der Ansprüche 5 bis 8, dadurch gekennzeichnet, daß die Verbindung (9) durch Schrumpfen hergestellt wird.

10. Welle nach einem der Ansprüche 5 bis 8, dadurch gekennzeichnet, daß die Verbindung (16) durch Schweißen hergestellt wird.

11. Welle nach einem der Ansprüche 5 bis 8, dadurch gekennzeichnet, daß die Verbindung durch Klemm- oder Keilvorrichtungen hergestellt wird.

12. Welle nach einem der Ansprüche 5 bis 11, dadurch gekennzeichnet, daß sich die Stirnflächen der Wellenteile (2; 7) radial außerhalb des biegeweicheren Wellenstücks (3) gegenseitig nicht berühren, sondern einen vorzugsweise gering bemessenen axialen Spalt (8) bilden.

13. Welle nach einem der Ansprüche 1 bis 12, dadurch gekennzeichnet, daß sie als Treibwalze (14) bzw. Kontaktwalze für eine Aufspulmaschine zum Aufwickeln von Chemiefasern benutzt wird.

**Claims**

1. Shaft (1) which may be operated at an operating speed above its first critical speed by means of a weakened longitudinal region (3) at its nodal point, the weakened longitudinal region (3) being connected without play to the remainder of the shaft (7, 7), characterized in that the shaft (1) is supported at two ends and only has the weakened longitudinal region (3) where the turning point of its second critical bending vibration lies.

2. Shaft according to claim 1, characterized in that the shaft (1) is weakened in the longitudinal region (3) by diminishing the supporting cross-sectional area, which is preferably provided in a rotationally symmetric manner and is preferably formed by an external circumferential groove (17).

**3.** Shaft according to claim 2,
characterized in that
the diminished cross-section (3) is brought by
a filling up to the shaft diameter.

**4.** Shaft according to claim 3,
characterized in that
the width of the diminished cross-section (3)
decreases in a radially outward direction.

**5.** Shaft according to claims 1 to 4,
characterized in that
the shaft (1) is divided transversely to the axis
of rotation, with the shaft parts (7) being connected to one another by a flexible shaft piece
(3).

**6.** Shaft according to claim 5,
characterized in that
one shaft part (2) has a centrical journal (4),
which has a rotationally symmetric flexible region and whose free end (4) is fitted into a
centrical recess in the adjacent shaft part (2).

**7.** Shaft according to claim 5,
characterized in that
the flexible shaft piece (3) is an independent
journal (3), which has a rotationally symmetric
flexible region (3) and whose ends (2) are fitted
into recesses in the shaft parts (7) which are
centrically opposed.

**8.** Shaft according to claim 6 or 7,
characterized in that
the journal (3) forms a cylinder element (2) at
each free end, and that the recess is in each
case a bore.

**9.** Shaft according to one of claims 5 to 8,
characterized in that
the connection (9) is established by shrinking.

**10.** Shaft according to one of claims 5 to 8,
characterized in that
the connection (16) is established by welding.

**11.** Shaft according to one of claims 5 to 8,
characterized in that
the connection is established by means of
clamping or wedge devices.

**12.** Shaft according to one of claims 5 to 11,
characterized in that
the end faces of the shaft parts (2; 7) are not in
mutual contact radially outside of the more
flexible shaft piece (3) but form an axial gap
(8) preferably of a small dimension.

**13.** Shaft according to one of claims 1 to 12,
characterized in that
the shaft is used as a driving roller (14) or
contact roller for a wind-on machine for taking
up synthetic fibres.

**Revendications**

**1.** Arbre (1) qui peut fonctionner, grâce à une
partie longitudinale (3) affaiblie au niveau de
son noeud de vibration, avec une vitesse de
rotation de service supérieure à sa première
vitesse de rotation critique, la partie longitudinale (3) affaiblie étant reliée sans jeu au reste
de l'arbre (7, 7), caractérisé par le fait que
l'arbre (1) est supporté de deux côtés et ne
comporte la partie longitudinale (3) affaiblie
qu'à l'emplacement du point de retour de sa
deuxième vibration de flexion critique.

**2.** Arbre selon la revendication 1, caractérisé par
le fait que dans sa partie longitudinale (3)
l'arbre (1) est affaibli par une réduction de la
surface de section portante, qui est réalisée de
préférence avec une symétrie de révolution et
est formée de préférence par une gorge (17)
circonférentielle extérieure.

**3.** Arbre selon la revendication 2, caractérisé par
le fait que la réduction de section (3) est
amenée au diamètre de l'arbre par un matériau
de remplissage.

**4.** Arbre selon la revendication 3, caractérisé par
le fait que la largeur de la réduction de section
(3) diminue radialement vers l'extérieur.

**5.** Arbre selon les revendications 1 à 4, caractérisé par le fait que l'arbre (1) est divisé perpendiculairement à l'axe de rotation, les parties
d'arbre (7) étant reliées l'une à l'autre par une
portion d'arbre (3) flexible.

**6.** Arbre selon la revendication 5, caractérisé par
le fait qu'une partie d'arbre (2) possède un
tourillon (4) centré qui présente une zone flexible à symétrie de révolution et qui est emboîté
avec son extrémité libre (4) dans un évidement
au centre de la partie d'arbre (2) voisine.

**7.** Arbre selon la revendication 5, caractérisé par
le fait que la portion d'arbre (3) flexible est un
tourillon (3) autonome qui présente une zone
(3) flexible à symétrie de révolution et qui est
emboîté avec ses extrémités (2) dans des évidements des parties d'arbre (7) se faisant face
de manière centrée.

**8.** Arbre selon la revendication 6 ou 7, caractérisé par le fait que le tourillon (3) forme à chaque extrémité libre un corps cylindrique (2), et que chaque évidement est un trou.

**9.** Arbre selon l'une des revendications 5 à 8, caractérisé par le fait que la liaison (9) est établie par frettage.

**10.** Arbre selon l'une des revendications 5 à 8, caractérisé par le fait que la liaison (16) est établie par soudage.

**11.** Arbre selon l'une des revendications 5 à 8, caractérisé par le fait que la liaison est établie par des dispositifs à clavette ou à serrage.

**12.** Arbre selon l'une des revendications 5 à 11, caractérisé par le fait que les faces frontales des parties d'arbre (2; 7) ne sont pas en contact l'une avec l'autre radialement en dehors de la portion d'arbre (3) flexible mais forment un espace (8) axial, de préférence de petite dimension.

**13.** Arbre selon l'une des revendications 1 à 12, caractérisé par le fait qu'il est utilisé en tant que cylindre moteur (14) ou cylindre de contact pour une machine à enrouler pour enrouler des fibres chimiques.

FIG.1

FIG.2

FIG.2a

FIG.3

FIG.3a

FIG.4

EP 0 292 867 B1

FIG.5

FIG.6

FIG.6a

EP 0 292 867 B1

FIG.7

12